# EUROPEAN PATENT APPLICATION

(11) **EP 2 796 627 A1**
(43) Date of publication of application: **29.10.2014**
(21) Application number: 14164652.1
(22) Date of filing: 14.04.2014
(51) Int. Cl.: E03F 3/06, F16L 55/18, F16L 55/16

(54) **Method and coating element for restoring a covered tube system**

(30) Priority: 15.04.2013 NL 2010640
(71) Applicant: W.M.L. van de Westerlo Beheer B.V., 5707 GC Helmond (NL); Eterno Water Solutions B.V., 5140 AM Waalwijk (NL)
(72) Inventor: Van Ganzenwinkel, Hendricus Maria Martinus, 5708 JG Helmond (NL); Hoogervorst, Robert Theodorus, 5161 AT Sprang Capelle (NL)
(74) Representative: Jilderda, Anne Ayolt

(57) **Abstract**

In a method for restoring a covered tube system, in particular a sewer system, at least a part of the component sewer bodies (10) is provided internally with an inner covering. The inner covering comprises a series of form-retaining covering elements (20) with walls which extend at least substantially parallel to the walls of a sewer body (10) and herein maintain an at least substantially uniform cavity (40). The cavity is filled with a filler material (45) which is intended and composed so as to enter into adhesion with both the sewer body and the covering element.

## Description

The present invention relates to a method for restoring a covered, in particular underground tube system, in particular a sewer system, which is at least partially assembled from successive sewer bodies in longitudinal direction which together form a longitudinal sewer channel with an at least substantially polygonal, in particular rectangular cross-section, wherein at least a part of the sewer bodies is provided internally with an inner covering which covers an inner wall thereof internally.

Such a method is highly suitable for renovation of sewer systems such as are to be found everywhere in inhabited areas but which have aged over the years. This concerns particularly main sewers which lead from a catchment area to a water purification plant. These main sewers are in some cases constructed from rectangular sewer bodies of reinforced concrete typically having an internal width in the order of 2 to 3 metres and an internal height in the order of one and a half metres or more. The thereby formed tube system lies substantially wholly underground and forms a sewer channel with a natural incline to the water purification plant.

The concrete of the sewer bodies is found in many cases to have been impaired internally by the ravages of time. This is mainly attributed to the action of hydrogen sulphide (H2S) which has escaped from faeces and which slowly but surely dissolves the concrete. In serious cases of deterioration the rebars of the concrete reinforcement have even come to be exposed, whereby the reinforcement will also be impaired and will eventually no longer be able to impart the required strength to the concrete. Excavation of such aged sewer bodies in order to replace them is often not a realistic option, and in any case not a desirable one. Not only is such an operation extremely costly and time-consuming, it is also necessary to take into account rights and claims of landowners and in some cases even built-up areas under which the sewer runs. It is therefore recommended to perform the renovation wholly underground via the sewer system itself.

A known technique for such an internal renovation is a coating with sprayed concrete which is arranged from inside onto the inner wall, and in particular the ceiling of the sewer bodies. A drawback hereof however is that the sprayed concrete will be no better able than the original inner wall to withstand acids, in particular hydrogen sulphide. This will therefore have to be repeated after a period of time, while interim inspections are necessary in order to monitor the degradation process.

In another existing technique a round plastic tube is introduced into the tube system and the drainage flow is from then on guided via the interior of this tube. The plastic applied here is clearly resistant to acids and provides a durable solution against any further effect thereof. A drawback however is that the polygonal, in particular rectangular, operative cross-section of the original sewer bodies is hereby reduced significantly in size. A throughfeed and buffer capacity of the sewer system is thus considerably reduced, which is undesirable. Such a plastic inner conduit moreover does not in itself provide for any structural restoration of the meanwhile impaired sewer bodies.

The present invention has for its object, among others, to provide a wholly new and innovative method which obviates these drawbacks to at least a significant extent.

In order to achieve the stated objective a method of the type stated in the preamble has the feature according to the invention that the inner covering comprises a longitudinal series of form-retaining covering elements which each enclose the sewer channel at least for the greater part in cross-section with walls extending between an inner wall of a sewer body and the sewer channel, which covering elements are introduced successively and joined together longitudinally inside the sewer channel, that at least a number of the walls of the covering elements extend at least substantially parallel to the inner wall of the sewer body and herein maintain an at least substantially uniform cavity with the inner wall of the sewer body, and that the cavity is filled with a filler material which is intended and composed so as to enter into adhesion with both the sewer body and the covering element. Because the covering elements thus run substantially parallel relative to at least a number of the walls of the original sewer body, the original operative cross-section of the tube system there is not reduced in size, or hardly so, apart from a cavity width and wall thickness of the elements. Because the cavity is moreover filled with a filler material which adheres on both sides, a structural restoration of the possibly already impaired sewer bodies is furthermore achieved. The original liquid flow is from then on guided through the cavities of the series of covering elements. The final result is a structural entity with stiffness and strength which will again have for many years substantially the same throughfeed and buffer capacity as the original tube system.

In a preferred embodiment the method according to the invention has the feature that the covering elements comprise walls of a plastic, in particular a glass fibre-reinforced plastic, more particularly a glass fibre-reinforced polyester. Covering elements are thus applied which are acid-resistant and corrosion-resistant, this enhancing a long lifespan and maintenance-free operation of the tube system. Many plastics are moreover characterized by an exceptionally smooth surface, whereby a flow resistance is reduced, this enhancing throughfeed capacity. The relatively small reduction in size of the operative cross-section is thus at least partially compensated in this respect.

A structural weakness of a tube element once it has been impaired will become particularly manifest on a ceiling thereof. In order to provide support at least at that position, a particular embodiment of the method according to the invention has the feature that the covering elements comprise a set of standing walls which are mutually connected by a ceiling, wherein the walls and the ceiling extend substantially parallel to an adjacent wall of the sewer body and are provided with preferably closable access openings to the intermediate cavity. Once the cavity has been filled with filler via the access openings, the ceiling and walls of the covering element together with the cured filler material thus impart a bearing function to the ceiling of the tube element and thus further counter the danger of collapse.

In a further particular embodiment the method according to the invention has the feature that the set of standing walls of the covering elements are mutually connected on a side remote from the ceiling by a floor, and that the covering elements define in cross-section an outer contour of substantially the same shape as an inner contour of the sewer body. The floor imparts to the covering elements the form of a form-closed box element, at least in cross-section. Such a form-closed entity imparts additional stiffness and strength. The floor of the covering element can moreover be given an optionally smoother form than the often already impaired floor of the sewer body, resulting in a lower flow resistance.

Other than several decades ago, there is an increasing demand nowadays for possibilities of laying underground cables and conduits. This is first and foremost the case for data connections, and then particularly glass fibre connections. From an ecological viewpoint heat can also be recovered from wastewater by providing a heat exchanger in a sewer system. With a view to such and other applications, a further particular embodiment of the method according to the invention has the feature that the floor at least partially encloses at least one channel separated from the cavity. The at least one channel thus provided by the floor can advantageously be utilized for the above stated and other purposes.

During a renovation of the tube system it is advantageous that an original function thereof is impeded as little as possible. For this purpose a temporary conduit can be laid above ground parallel to the tube system, this conduit taking over the function of the tube system during the work operations. This is however relatively expensive and must moreover be agreed with land owners who may possibly have to be paid. It is therefore recommended to also perform this temporary function underground. With a view hereto a further particular embodiment of the method according to the invention has the feature that the channel comprises a gully which is freely accessible on a bottom side, that a tubular conduit is arranged in the tube system and that the covering elements are placed over the tubular conduit, wherein the tubular conduit is received for at least the greater part in the gully.

The tubular conduit can thus take over the function of the tube system temporarily while the covering elements are being placed thereover. Because the internal cross-section of the tubular conduit will be considerably smaller than that of the sewer body or covering element, it is advantageously employed as pressure conduit. A pump pressure compensates the cross-sectional loss here in respect of a throughfeed capacity of the tube system, while a buffer capacity with one more basins can be collected. Later, i.e. after the tube system with the covering elements has once again taken up its original function, the tubular conduit can be retained for other purposes. A similar working embodiment can be achieved with a further particular embodiment of the method according to the invention, which is characterized for this purpose in that the covering element has no floor.

The covering elements arranged according to the invention in the tube system provide further options for responding to new requirements currently being set, for instance for a sewer system. One of these is a separate processing of relatively clean rainwater and relatively dirty wastewater. With this and other considerations in mind, a further particular embodiment of the method according to the invention has the feature that the covering elements comprise internally at least one partition which separates the cavity into at least two compartments. The thus separated compartments of interconnected covering elements thus form separate channels which can for instance be utilized for respectively rainwater and wastewater. A relative dimensioning can be adapted here to anticipated peak deliveries to the respective channels.

In a further preferred embodiment the method according to the invention has the feature that the sewer bodies comprise concrete and a cement-bound filler is applied as filler material, in particular a filling mortar on the basis of cement and marl. Such a filling mortar flows sufficiently in the cavity for satisfactory filling thereof and moreover provides a good adhesion to the concrete of the sewer bodies. After curing of the mortar a structural unit is thus obtained which approximates, if not fully restores, the original mechanical strength of the tube system. The filling mortars which can be applied for this purpose are commercially available. It has been found in practice that a mixture of cement and marl, commercially available under the brand name Dammer®, can for instance be employed particularly well within the context of the invention because of excellent flow and adhesive properties.

A further preferred embodiment of the method according to the invention is characterized in that the walls of the covering elements comprise plate parts which are mutually connected. The covering elements can thus be assembled to size in relatively simple matter, wherein if desired arcuate segments can also be provided or the shape of the covering elements can otherwise be modified and adapted in order to be able to follow an existing bend in the tube system.

In order to enhance adhesion and cohesion with the filler material introduced into the cavity, a further preferred embodiment has the feature that the plate parts have externally an open rib structure, in particular an open rib structure of standing ribs from which lying edge parts extend at a distal outer end. The filler material thus flows between and particularly also under (the edge parts of) the ribs, whereby a reliable anchoring of the covering elements in the filler material is obtained following curing of this latter.

Although successive covering elements can per se be laid cold against each other and for instance glued together in order to realize a desired coupling, a further particular embodiment of the method according to the invention has the feature that connecting means are provided between successive covering elements. The connecting means can for instance be formed by complementary connecting members of a snap connection or tongue and groove connection and enhance a correct alignment and interconnection of the covering elements. A further particular embodiment of the method is further characterized here in that the connecting means comprise a water barrier, in particular an elastomeric seal.

The invention also relates to a covering element of the type as applied in one or more of the above described embodiments of the method according to the invention, and will now be further elucidated with reference to a drawing. In the drawing:
fig. 1 shows a cross-section of a tube system having therein an exemplary embodiment of a covering elements according to the invention;
fig. 2 shows a longitudinal section of the tube system with covering element of figure 1;
fig. 3 shows a cross-section of a tube system having therein a further exemplary embodiment of a covering element according to the invention;
fig. 4 shows a cross-section of a tube system having therein a further exemplary embodiment of a covering element according to the invention; and
fig. 5 shows a cross-section of a tube system having therein a further exemplary embodiment of a covering element according to the invention.

The figures are otherwise purely schematic and not drawn to scale. Some dimensions in particular may be exaggerated to greater or lesser extent for the sake of clarity. Corresponding parts are generally designated in the figures with the same reference numeral.

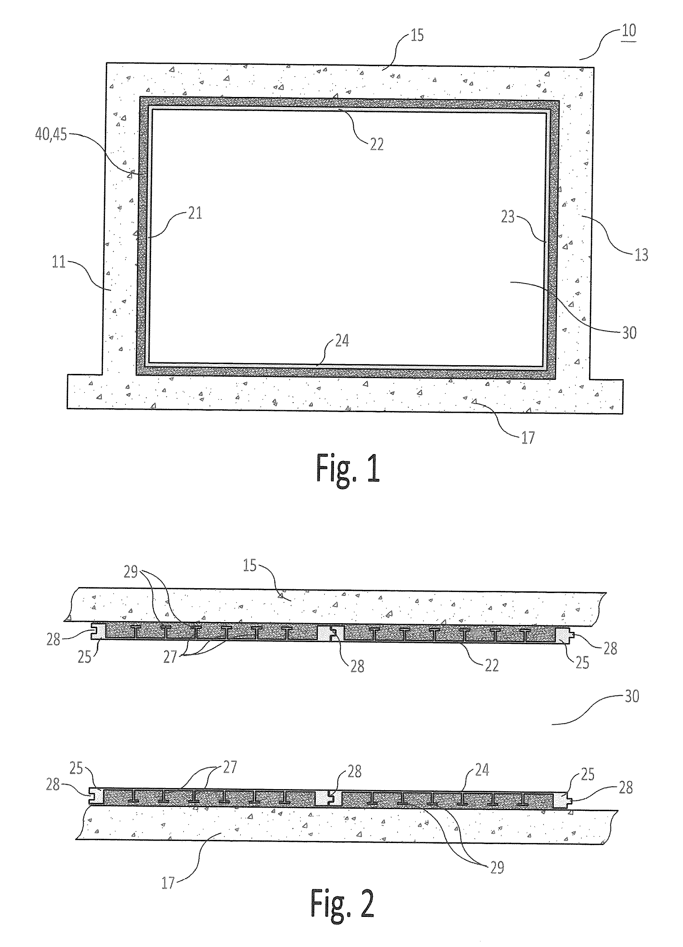

The tube system of figure 1 comprises a number of polygonal, i.e. substantially rectangular sewer bodies 10 of concrete which are joined together and together form a main sewer in the order of several to several tens of kilometres. The tube system lies at an incline here so that a natural flow of wastewater will occur therein. The tube elements each comprise a set of standing side walls 11,13 between a ceiling 15 and a floor 17. These walls together bound a rectangular cross-section typically having an internal width of 2450 millimetres and an internal height of 1650 millimetres. Such main sewers have been arranged underground at diverse locations and in many cases were laid decades ago. Over the years damage has in some cases been caused, particularly to the ceiling 15 thereof, by the action of hydrogen sulphide. In the worst case even a reinforcement of the concrete has come to be exposed here, whereby there is a real danger of collapse.

In order to restore the tube system a covering of a series of interconnected covering elements are arranged internally therein according to the invention. An embodiment thereof is shown in figures 1 and 2. These covering elements are formed from four plate parts 21..24 of a glass fibre-reinforced plastic, in this embodiment polyester, which are glued together at corner points. The corners can optionally be coated internally in a longitudinal direction with a liquid-tight tape which is glued therein in order to ensure leak-tightness. This is not further shown in the figure and is assumed to be sufficiently clear to a person with ordinary skill in the art. The plastic applied has an extremely good resistance to acids, salts and other corroding chemicals.

Plate parts 21..24 have externally an open rib structure of standing ribs 27 provided at an outer end with lying edge parts 29. Ribs 27 are provided at a centre-to-centre distance of about 100 millimetres relative to each other and have a height in the order of several centimetres. Use is made in this embodiment of a wall thickness of about 5 millimetres. At the end surfaces the covering elements are provided all around with a beam body 25 in which coupling means 28 are provided in the form of a tongue and groove assembly for fitting connection and a correct bond with a following covering element as shown in figure 2. Furthermore, a water barrier can optionally be provided between the covering elements, for instance in the form of a rubber or otherwise elastomeric ring in order to ensure a proper liquid-tightness.

Covering elements 20 enclose a continuous cavity 30 which, with a rectangular cross-section in the order of about 2300 x 1500 millimetres, differs to only small extent from the original operative cross-section of tube system 10. The covering elements have a length in the order of several metres, in this example about 5 metres, and can if desired be provided to size in order to follow for instance a bend in the tube system. The walls of the covering elements maintain with an adjacent inner wall of sewer body 10 an all-round cavity 40 with a substantially fixed width in the order of several centimetres.

For durable renovation of the tube system such covering elements are successively arranged distally to proximally therein. After having been arranged, the cavity 40 between covering element 20 and the inner wall of the associated sewer body 10 is filled in each case with a suitable filler material 45. In this embodiment use is made for this purpose of a filling mortar based on a mixture of marl and cement. Such a mortar is commercially available under the brand name Dammer®.

Filling mortar 45 is mixed at the building site with mains water or clean surface water. A charge mixer or a continuous mixer (cannon mixer) is used for mixing purposes. The mixed filling mortar can be poured or pumped directly out of the mixer under free fall or under pressure using a pump into the cavity for filling. After mixing the filling mortar absorbs no more water. The product begins to cure six to seven hours after being arranged. All the added water is bound here to form a substantially contraction-free product.

The filling mortar adheres on the one hand to the inner wall of sewer body 10 and flows on the other wholly around the ribs 27,29 of the covering elements so that a reliable anchoring is also created there. For the purpose of an adequate access to the cavity, one or more filling openings (not shown) can be provided in the walls of covering elements in order to pump the filler material therethrough directly into the adjacent cavity. The filling is preferably performed here upward from the bottom and the cavity above the ceiling and along the standing walls is filled only after the cavity under the floor has cured. This provides the option of using the floor cavity, which has in the meantime cured, as foundation for props or other support means which temporarily support and stabilize the ceiling so long as the filler material thereabove has not yet fully cured and so still exerts a considerable load on the ceiling. In a practical embodiment such filling openings are prearranged in single or multiple form in all walls, i.e. in the factory, and provided with coupling means, such as a screw thread or bayonet, for (a nozzle of) a feed conduit for the filler material being applied. Suitable closing means such as a closing cap or plug can then be placed thereon afterwards.

A mechanical and structural entity is thus finally obtained which restores the original strength of the tube system. Because use is made for the covering elements of an acid-resistant plastic, the tube system is moreover protected durably here against hydrogen sulphide and other acids or chemicals should these occur in the sewer system. Once one or several covering elements have thus been arranged, a following covering element is placed thereagainst and set in the tongue and groove arrangement. The whole tube system can thus be fully renovated along the whole length from the inside in a manner which leaves an operative cross-section thereof largely intact.

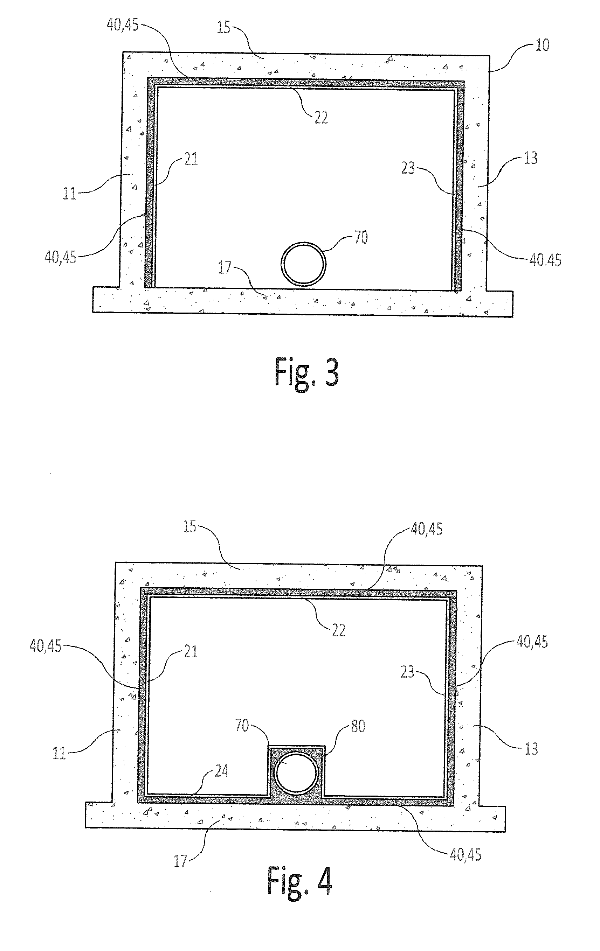

Figures 3 to 5 show alternative embodiments of covering elements applicable within the scope of the method according to the invention.

Use is made in figure 3 of covering elements which have no floor. This provides the option of laying beforehand in the tube system a separate conduit or tube 70 which temporarily takes over a main flow through the tube system. Use can for instance be made for this purpose of a pressure conduit in which a liquid is guided under increased (pump) pressure. The covering elements without floor can then be arranged successively thereover in the manner indicated above.

This setup is also possible with the embodiment shown in figure 4 of the covering elements which in this case comprise for this purpose a modified floor with a through-channel in the form of a gully 80 open on an underside. A pressure conduit 70 is wholly received in gully 80 so that successive covering elements can be placed thereover. In addition to a greater structural stiffness because of the form-closing floor, this embodiment provides the advantage that pressure conduit 70 can later be retained for the same or other purposes. Conduit 70 can serve particularly as tubular casing for power lines, gas mains or data connections.

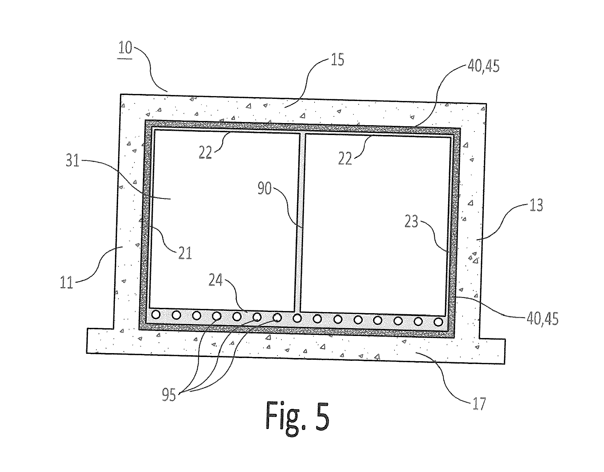

A further alternative embodiment of the covering elements is shown in figure 5. The covering element comprises here a partition 90 which divides cavity 30 into two compartments 31,32. In this embodiment the compartments are of about equal size, although this can be varied if desired and more partitions, which may or may not be vertical, can optionally also be applied. Compartments 31,32 provide the option of a separate discharge for relatively clean rainwater and more heavily contaminated wastewater. A compartment can also be utilized to accommodate connecting lines of varying nature, in particular data cables. The floor of the covering element is moreover provided in this embodiment with a system of passages 95. This system of passages can serve as heat exchanger for heat recovery from the sewage water or, if desired, can also be utilized for throughfeed of cables or other conduits.

Although the invention has been further elucidated above with reference to only a limited number of exemplary embodiments, it will be apparent to the person with ordinary skill in the art that many other embodiments and variations are possible within the scope of the invention. Aspects of the different exemplary embodiments can thus be combined with each other. The stated materials and dimensions are also given only by way of illustration and can be adapted and modified to any specific situation.

## Claims

1. Method for restoring a covered, in particular underground tube system, in particular a sewer system, which is at least partially assembled from successive sewer bodies in longitudinal direction which together form a longitudinal sewer channel with an at least substantially polygonal, in particular rectangular cross-section, wherein at least a part of the sewer bodies is provided internally with an inner covering which covers an inner wall thereof internally, **characterized in that** the inner covering comprises a longitudinal series of form-retaining covering elements which each enclose the sewer channel at least for the greater part in cross-section with walls extending between an inner wall of a sewer body and the sewer channel, which covering elements are introduced successively and joined together longitudinally inside the sewer channel, that at least a number of the walls of the covering elements extend at least substantially parallel to the inner wall of the sewer body and herein maintain an at least substantially uniform cavity with the inner wall of the sewer body, and that the cavity is filled with a filler material which is intended and composed so as to enter into adhesion with both the sewer body and the covering element.

2. Method as claimed in claim 1, **characterized in that** the covering elements comprise walls of a plastic, in particular a glass fibre-reinforced plastic, more particularly a glass fibre-reinforced polyester.

3. Method as claimed in claim 1 or 2, **characterized in that** the covering elements comprise a set of standing walls which are mutually connected by a ceiling, wherein the walls and the ceiling extend substantially parallel to an adjacent wall of the sewer body and are provided with preferably closable access openings to the intermediate cavity.

4. Method as claimed in claim 3, **characterized in that** the set of standing walls of the covering elements are mutually connected on a side remote from the ceiling by a floor, and that the covering elements define in cross-section an outer contour of substantially the same shape as an inner contour of the sewer body.

5. Method as claimed in claim 4, **characterized in that** the floor at least partially encloses at least one channel separated from the cavity.

6. Method as claimed in claim 5, **characterized in that** the channel comprises a gully which is freely accessible on a bottom side, that a tubular conduit is arranged in the tube system and that the covering elements are placed over the tubular conduit, wherein the tubular conduit is received for at least the greater part in the gully.

7. Method as claimed in claim 3, **characterized in that** the covering element has no floor.

8. Method as claimed in one or more of the foregoing claims, **characterized in that** the covering elements comprise internally at least one partition which separates the cavity into at least two compartments.

9. Method as claimed in one or more of the foregoing claims, **characterized in that** the sewer bodies comprise concrete and a cement-bound filler is applied as filler material, in particular a filling mortar on the basis of cement and marl.

10. Method as claimed in one or more of the foregoing claims, **characterized in that** the walls of the covering elements comprise plate parts which are mutually connected.

11. Method as claimed in claim 10, **characterized in that** the plate parts have externally an open rib structure, in particular an open rib structure of standing ribs from which lying edge parts extend at a distal outer end.

12. Method as claimed in one or more of the foregoing claims, **characterized in that** connecting means are provided between successive covering elements.

13. Method as claimed in claim 12, **characterized in that** the connecting means comprise a water barrier, in particular an elastomeric seal.

14. Covering element of the type as applied in the method as claimed in one or more of the foregoing claims.
